# EUROPEAN PATENT SPECIFICATION

(11) **EP 3 054 668 B1**
(45) Date of publication and mention of the grant of the patent: **01.11.2017**
(21) Application number: 15153645.5
(22) Date of filing: 03.02.2015
(51) Int. Cl.: H04N 5/232, H04N 5/217

(54) **Method and device for processing a video stream**
Verfahren und Vorrichtung zur Verarbeitung eines Videostroms
Procédé et dispositif de traitement d'un flux vidéo

(43) Date of publication of application: 10.08.2016
(73) Proprietor: Axis AB, 223 69 Lund (SE)
(72) Inventor: Ardö, Björn, 224 67 Lund (SE)
(74) Representative: Awapatent AB

(56) References cited:
- EP-A1- 1 950 702
- EP-A2- 2 288 140
- US-A1- 2014 313 374
- US-B2- 7 187 413

## Description

### Technical field

The present invention relates to processing of a stream of images in a video application, in particular a stream affected by a shift in focus of a video camera.

### Background

Most video-camera systems will have an autofocus function, i.e. that the camera incorporates processing algorithms for determining if an imaged scene is in focus or not, and automation for adjusting a focus motor position correspondingly,

A common algorithm involves altering the focus-motor position and comparing an image acquired before the alteration with an image acquired after the alteration. The steps are iterated according to an optimization algorithm until in image displaying optimal sharpness is obtained, and in each iteration a new image is acquired.

In effect the focus-motor position may be changed by moving a lens of the video camera or by moving an image sensor of the video camera, i.e. by moving an optical element of the video camera, or rather the effect of these action may be equal to a change in focus-motor position.

An effect of such a passive autofocus, where the optimal focus-motor position is found by an iterative process is that some images in the stream of images will be out of focus by necessity.

In one approach all images in the stream are shown, meaning that an operator will see how the image wanders into focus and out of focus as the settings for the optical elements are optimized. This approach is not uncommon for digital still cameras, and it is also applied in digital video cameras.

In another approach the images that are out of focus are hidden from the operator, i.e. they are removed from the displayed stream such that the user or operator will not see the effects of the autofocus operation.

One parameter determining whether an autofocus operation should be initiated or not is an "in-focus check". In the in-focus check the starting point is the current focus-motor position giving the image a certain contrast value. From the starting point the focus-motor position is shifted upwards or downwards a fixed step length, and the contrast value for the new focus-motor position is calculated, after which the focus-motor position is shifted back to the original position. Following that procedure the focus-motor position is shifted in a similar way in the opposite direction, and the same procedure is repeated. It may be mentioned that there are different approaches to an in-focus check. After the in-focus check the logics of the camera may conclude whether the focus is at a local optimum or if an autofocus operation should be initiated.

EP2288140 (A2) discloses an image capture apparatus comprising: moving means for moving a focus position of a photographing lens relative to an image sensor at a predetermined amplitude by changing a distance in an optical axis direction between the photographing lens and the image sensor; detection means for detecting a focus state of an image obtained from the image sensor; and defocus correction means for performing defocus correction on the image obtained from the image sensor during motion performed by the moving means, based on the focus state detected by the detection means, so that the focus state of each image for display on the display device at least approaches the focus state for an in-focus image.

US2014313374 (A1) discloses a system for capturing sequences of digital images, including a lens, a digital sensor including a plurality of light-sensitive elements, a focusing module suitable for varying the focus of the lens on the sensor, and an electronic processing unit. The electronic processing unit is suitable for determining a variation in magnification between two consecutively captured digital images from a variation in the focus of the lens, and for determining a digital compensation for said variation in magnification. The electronic processing unit is further suitable for digitally processing at least one of the consecutively captured digital images on the basis of said predetermined compensation. The system enables compensation for visual effects resulting from changes in magnification between two consecutively captured images.

US2004017502 (A1) discloses an image based autofocus method and system that includes receiving image data; monitoring and analyzing the contrast between different portions of the image data in determining the location of a target wherein the different portions of the image data contain at least one type of image pixel information and the monitoring and analyzing are performed using at least one kernel filter to determine a focus measure; adjusting a focus mechanism that is focusing on the image data; observing an image quality of the image data that has been focused; and continuously outputting an image to support an image processing frame rate and adjusting the focus mechanism to obtain an improved focus image by adjusting the focus mechanism in a positive direction, a negative direction or a zero (0) direction based upon effectuating a desired change in the observed image quality of the image data.

EP1950702 (A1) discloses an imaging apparatus including an imaging section, a subject extracting section, and an image processing section. The imaging section captures an object image and generates data of an image. The subject extracting section extracts a main subject from the image. The image processing section performs a noise addition process on the data of the image to add noise for an area where the main subject is positioned within the image.

The present invention aims at providing an improved procedure in relation to an in-focus check.

### Summary of the invention

The present disclosure provides a method for processing images of an image stream acquired during an in-focus check. The method comprises acquiring a first image at a first focus-motor position, the first image having a first sharpness value, and acquiring a second image at a second focus-motor position shifted in a first direction in relation to the first focus-motor position, the second image having a second sharpness value. When an image has been acquired a first sharpness value is calculated or estimated in relation to the first image and a second sharpness value is calculated or estimated in relation to the second image. A sharpening filter is applied to the second image, and the sharpening filter is enhanced in relation to any sharpening filter applied to the first image, thus enhancing the sharpness value thereof before adding to a display stream.

Using the above method an in-focus check will be less noticeable for the user and for image processing algorithms. In effect a difference between the first sharpness value and the second sharpness value will be reduced. The sharpness value referred to is a quantitative measure of the sharpness of the image, and as such the sharpness value is a measure estimating how well the image is focused. The sharpness value may be determined for the entire image, yet it many applications it makes more sense to evaluate the focus in certain regions of interest only. A region of interest may be defined by a user, yet it may also be defined automatically e.g. by using object detection algorithms. In many applications the measure used for the sharpness value is a contrast value for the image. In a practical case an image scene is likely to have a depth, in that objects are distributed at different distances from the camera. This means that as the focus-motor position is adjusted, the original object being in focus may be put out of focus while other objects may come into focus. In such a case the regions of interest may be have even more relevance. The sharpness value will be discussed in the detailed description as well.

It is to be understood that the processing can be performed on raw image data, rather than on an actual image as such.

In one or more embodiments the method may comprise acquiring a third image at a third focus-motor position shifted in a direction opposite to the first direction, and applying a sharpening filter on the third image, thus increasing the sharpness value thereof and forwarding it to a display stream.

By the acquisition of the third image a full in-focus check is enabled, and the sharpness values for all three images may be compared and the suitable action may be triggered.

In one or several embodiments a strength of the sharpening filter applied to the second and/or third image is based on a present focus-motor position for the particular image, i.e. the focus-motor position for the first image and the second and/or third image may be used.

The information regarding a present focus-motor position is updated continuously in the camera, and that information may be used for reference to a database in camera such that the desired strength may be found by looking it up in the database. The database as such may comprise various parameters coupled to various focus-motor position. In such an embodiment the sharpness value may be estimated or assumed based on empirical data or calculations. Knowing the first-focus motor position may give the starting point or base value, and knowing the second and/or third (depending on the embodiment) focus-motor position will give input to deducing an appropriate shift in the properties of the sharpening filter.

In one or more embodiments a strength of the sharpening filter applied to on the second and or third image is based on a present sharpness value in a region of interest in the first image.

There may be imaged scenes where there is a foreground containing the object of interest, such as a doorway, a building, a parking lot etc, and the foreground is in focus. A background, such as a stretch of road, houses, woods, etc are located further away, or at least at a different distance, and is not in focus. When applying the invention method to such a situation it may again be relevant to define the foreground as a region of interest, and to ensure that the application of the sharpening filter is applied with care. There is no reason to try to achieve a sharp background in the images with shifted focus since it was out of focus to begin with. Rather, in non-technical terms, it is preferred to have the shifted images to look as much as the original image as possible in order to minimize the visual effects of the in-focus check. Therefore it may be preferred to use the first image as a starting point, which should not exclude the combined use with a database, and to relate the sharpening filter for the shifted images with the properties of the original image.

In one or more embodiments the strength of the sharpening filter is set to vary between different regions of the image. This has been discussed referring to regions of interest. A consequence of the ambition to make the shifted images, i.e. the images having a focus-motor position differing from the first focus-motor position, to look as similar as the first image as possible may be that some regions of the shifted images should get a reduced sharpness, while the sharpness in other regions of course should be increased.

In one or several embodiments a region of interest may be defined on the basis of an object identified with object detection. Such an object may be a movable object, such as an individual or a vehicle, and it may also be a background object, such as a building, a road, etc.

According to another aspect of the present invention it may comprise application of a scaling operation transforming the second and/or third image acquired with a focus-motor position shifted from the first focus-motor position of the first image. The purpose of the action may be to harmonize the field of view in the images, i.e. the goal is the same as the goal for the application of the sharpening filter, to make the in-focus check less noticeable.

In a further embodiment the scaling operation comprises a distortion correction ensuring that stationary objects in the first and second and/or third image are imaged in a stationary position, having the effect of less differences between the images acquired during the in-focus check.

In one or more embodiments the method may comprise applying a noise-reduction filter to the image, wherein the noise-reduction filter may be based on a mask such that the amount of noise-reduction may vary in different regions of the image. It may be preferred to enhance the noise-reduction in areas where the sharpening filter is the strongest, since an increase of contrast may result in an increase in noise. Furthermore, an enhanced filter may correspond to a stronger filter, yet it may also correspond to a more refined filter.

### Brief description of the drawings

Fig. 1 is a block diagram for a video camera of a kind that may be used in embodiments for the present invention.
Fig. 2 illustrates an image stream in an auto-focus operation.
Fig. 3 illustrates an image stream in a prior art auto-focus operation.
Fig. 4 is a diagram illustrating method according to one embodiment of the present invention.
Fig. 5 is a diagram similar to Fig. 4, illustrating another embodiment of the present invention.
Fig. 6 illustrates an image stream in an in-focus check as used in a first embodiment of the present invention.
Fig. 7 illustrates an image stream in an in-focus check as used in a second embodiment of the present invention.

### Detailed description of embodiments

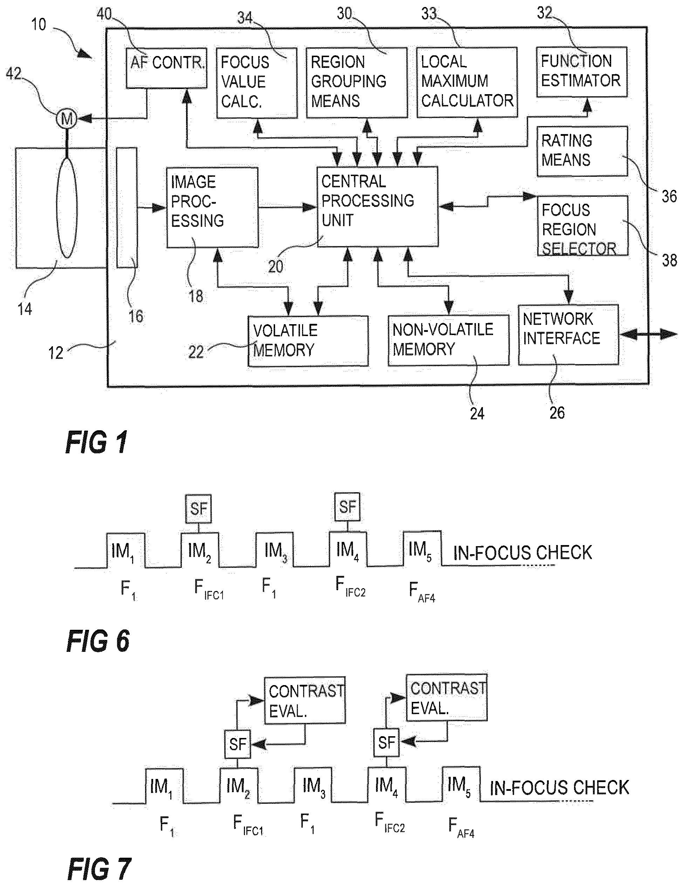

A camera 10 arranged to perform one embodiment of the invention is shown in Fig 1. The camera 10 includes a housing 12, a lens 14, an image sensor 16 for registering an image of a camera view, an image processing unit 18 for initial image processing, a central processing unit 20 for general control and for execution of program code, a volatile memory 22 for temporary storage of information, a non-volatile memory 24 for persistent storage of information, and a network interface 26 for receiving and/or transmitting instructions, information, and image data, over a network. Moreover, the central processing unit 20 is arranged to implement a region grouping means 30, a function estimator 32, means for calculating a local focus maximum from a function 33, a focus value calculator 34, a rating means 36 for rating of regions, a focus region selector 38 for selecting a region based on the rating, and an autofocus controller 40. These functionalities may be implemented by the central processing unit 20 by means of arranging program code that when executed performs the functionality of these devices. Further, the skilled person appreciates that the functionality of these devices also may be implemented using logic circuitry or other hardware configurations.

The autofocus controller 40 is arranged to control a focus motor 42 at the lens 14 in order to adjust the lens distance of the lens 14 and thereby adjust the focus of the camera view captured by the image sensor 16. When controlled by the central processing unit 20 the autofocus controller may be arranged to repeatedly set the lens distance of the camera to different lens distance values in order to enable sampling of a plurality of sharpness values at different lens distance settings. The lens distance being a spatial relation between a focus plane of the camera and a lens/lenses of the camera imaging optics. Accordingly, the lens distance is the property of the lens that is changed when the focus of the camera/lens is changed from an object nearby to an object further away and vice versa.

If an autofocus operation is triggered the focus adjustment settings are altered in a first direction. An image is acquired and the sharpness or focus (by any one measure), of the image is compared to the sharpness of a preceding image. The preceding image may be the adjacent image in the stream, or another image. If the focus has been improved the iterations continue. If the sharpness has deteriorated, however, it would indicate that the optimal focus has been passed, and the effect is that the algorithm enters a new loop in which the first step is to reverse the direction in which the focus-motor position is altered and in which the remaining steps are similar. A comparison of images is repeated until there is no longer an improvement in sharpness. This indicates that the focus-motor position has reached, or actually passed, an optimal position (at least locally) and thus the optimal settings may be identified and used. As will be disclosed in the following, and which is known to the skilled person, an in-focus check will comprise a condensed version of the autofocus operation in that it merely checks if the present focus-motor position is the optimal one or not.

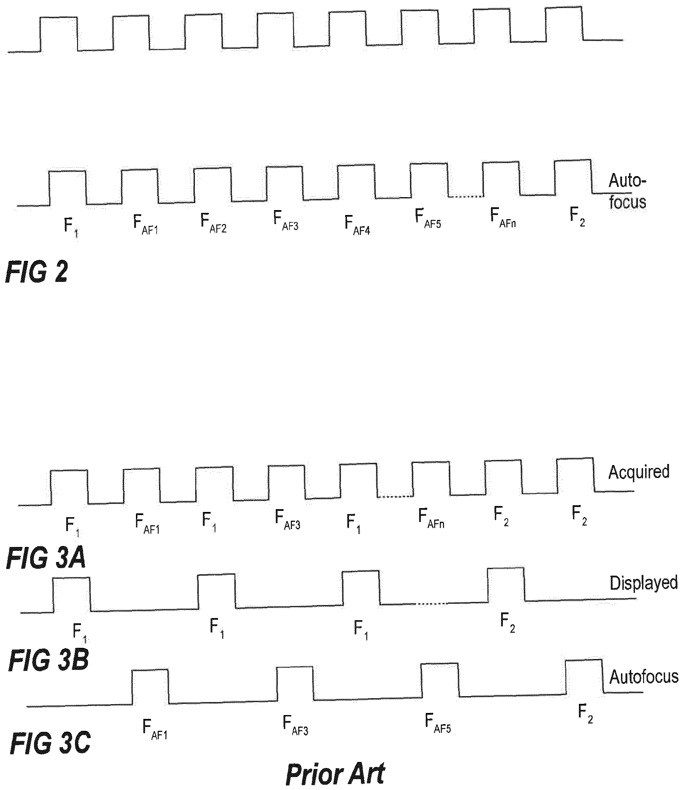

Fig. 2 is a schematic illustration of a sequence or stream of image frames acquired by a video camera and output from the image sensor for further processing. The frames are output from the sensor at a specified rate, e.g. 60 frames per second (fps), 30 fps or at another rate. As an autofocus operation is triggered a majority of the images in the stream will be out of focus until the autofocus operation is completed. An autofocus algorithm may give rise to a pulsating or gradually decreasing blurriness before the new focus-motor position is applied, which will be discussed in relation to in-focus check, yet in an autofocus operation this behavior may be considered more acceptable since for an autofocus operation to initiate the image is most likely blurry to begin with.

The autofocus operation is performed to the benefit of overall image quality, i.e. and in that way to the benefit of the user or operator. Such an autofocus operation may be triggered by an in-focus check according to the present disclosure or another in-focus check, while the in-focus check as such may be initiated by a less qualitative reason, e.g. that a certain time interval has elapsed since the last in-focus check.

The effect of this may be that the user observes a displayed view with acceptable sharpness and for no apparent reason the displayed view will shift in focus and become blurry before it is sharp again. The varying blurriness may be annoying for someone observing scene via a display, possibly less so for someone preparing to take a snapshot than for someone observing a video stream from the camera, again referring to the comparison with an autofocus operation. Furthermore, the effect may result in issues in connection with image processing algorithms, an example being the generation of false positives for motion detection algorithms.

One known approach to cope with the described effect is to prevent the images affected adversely by the autofocus operation (or in-focus check) from be displayed. This is illustrated by Fig 3A-C. Images are acquired (Fig. 3A) at a first rate but only every other image (Fig. 3B) is displayed to the operator and the remaining images (Fig. 3C) are used for e.g. autofocus purposes. This means that the optical element is moved between an original position F₁ (before autofocus is initiated) when acquiring the images of Fig. 3B, and positions F_{AF} as determined in an autofocus algorithm for the images of Fig. 3C. When the autofocus operation is finalized a new original position F₂ is set. In the described embodiment the ratio of hidden/shown pictures is 1/1, yet in other embodiments the ratio may instead be 1/2, 1/3, etc, where the hidden ones are where the focus-motor position is changed and evaluated. For the case of an in-focus check not triggering an autofocus operation this would correspond to that the original focal settings and the final focal settings are the same, and that basically only F_{AF1} and F_{AF2} would have to be measured.

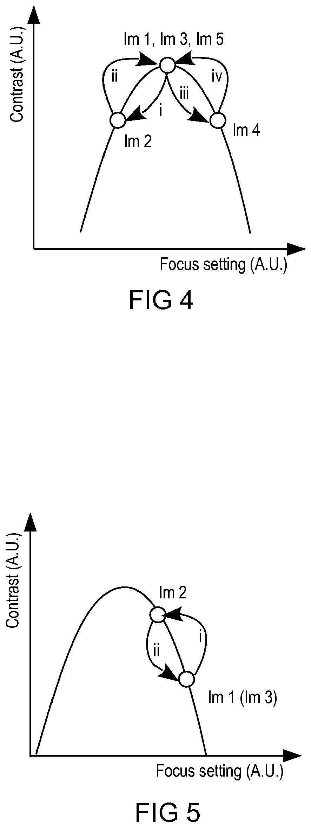

Fig. 4 schematically illustrates the basics for an in-focus check in a situation where it is verified that the present focus-motor position is optimal. The curve indicates the sharpness, i.e. the contrast or sharpness value in the image. The original position for the focus-motor position in the present example is the optimal one, and in that position a first image Im 1 is acquired and evaluated. A focus controller of the camera is then instructed to shift the focus-motor position of the imaging optics to a new value and a second image Im 2 is acquired. The size of the focus-setting shift may differ between different algorithms, and may itself be the subject for an optimization procedure, yet this is out of the scope of the present description. Returning to the described situation a sharpness value for the first image may now be compared to a sharpness value of the second image to determine if the shift made the sharpness value worse or better. The focus controller may shift the focus-motor position back to the original, and then a similar operation is performed shifting the focus-motor position in an opposite direction acquiring the fourth image Im 4 as shown in Fig. 4, a third and fifth image being acquired at the original focus-motor position. The outcome of the operation as shown in Fig. 4 is verifies that the focus-motor position where at a (local) optimum and that the present focus-motor position may be maintained. A typical in-focus check may incorporate shifting the focus-motor position several steps in a first or a second direction, and the length of the steps may vary depending on the conditions.

Referring to embodiments of the present disclosure in a more general manner, it is to be understood that finding the maximum contrast may not equal maximizing the contrast in the image on a whole. Consider a situation where a smaller object, such as a person or a car, is to be in focus in the foreground, and the background comprises a larger object covering a large portion of the field of view, such as a building. The foreground is in focus and the background is slightly out of focus. If the focus-motor position is shifted slightly the effect may be that the foreground is slightly out if focus while the background is in focus. The effect may be that the contrast on the whole increases when the object of interest is out of focus so that an automatic focus-motor position becomes erroneous. A mask determining where to measure contrast is therefore more complex than a mere evaluation of contrast, and in the description the word "sharpness value" will be used as a measure of a level of sharpness as defined according to a particular situation.

Returning to the description of embodiments: An alternative situation is illustrated in Fig. 5. Here it is shown how the first focus-motor position (the settings for the first image Im 1) are offset to the right in relation to the optimum settings. As the focus-motor position is shifted and the second image Im 2 is acquired an evaluation of the sharpness immediately reveals 1) that the sharpness for the second image was improved in relation to the first image, and 2) in what direction the focus-motor position should move in order to find the optimum. The outcome of the operation in this case would most likely correspond to that an autofocus operation is initiated.

Such in-focus checks may be initiated as a result of various triggers. One trigger may be temporal; the in-focus check is performed once every 30 seconds, every 60 seconds, every 200 seconds or any other period. The check may also be triggered by a sudden change in contrast in a region of interest, an object entering the imaged scene, a detected motion of the camera, a change in temperature, etc. or any combination thereof.

An effect of the shift in focus-motor position during the in-focus check is that the sharpness value of the shifted images (referring to Im 2 and Im 4 in Fig. 4) will be reduced by definition. The statement may of course only be true if the original focus-motor position is at - or close to - the optimum, and this is the case for most in-focus checks by number. Another effect is that the altered focal length of the system resulting from a shift in focus-motor position may result in a shift in magnification. More precisely put: it will most often result in what appears as a shift in magnification, but the magnitude of the magnification shift may depend on the properties and settings of the imaging optics used. In an embodiment where all images acquired during an in-focus check are displayed a user may observe how the image "pulsates" during the check, i.e. the view becomes blurry and the magnification of the view varies. This may of course be annoying for the user, that is why some of the prior art includes that images acquired with shifted focus-motor position is hidden from display. Apart from merely being annoying and reducing the user experience, the behavior may be a problem for image analysis performed in downstream processes, e.g. for a motion detection algorithm. Furthermore, hiding one or several images may be a poor management of resources since a large amount of potentially interesting information will be discarded.

Therefore, in a first embodiment of the present invention, a sharpening filter may be applied to the images acquired during shift of focus. Rather, since a sharpening filter is applied to most images, a stronger or enhanced sharpening filter is applied to images acquired during a shift of focus than what is usually applied. This is exemplified in Fig. 6. Fig. 6 illustrates a stream similar to Fig. 2 and 3 yet of a first embodiment of the present invention. The last image acquired before start of the in-focus check operation will be referred to as the initiation image IM₁, and the rest of the images are also named in correspondence with the nomenclature of Fig. 4. The focus-motor position for the first image with a focus shift is referred to as F_{IFC1} and for the second image having the focus-motor position shifted in the opposite direction the corresponding focus-motor position is referred to as F_{IFC2}. It is a feature of the present embodiment to allow for all images in the acquired image stream to be forwarded to a display stream, in order to maintain a constant flow of images and information. The display stream is meant to signify that the images are forwarded so that they may be displayed after further image processing as oppose to being discarded and hidden from view. In the first embodiment of the present invention the issue of blurring is handled by the application of a sharpening filter, e.g. an un-sharp mask, on the images before or after they have been added to the display stream, at least before the images are displayed. In this way the pulsating blurring effect will be less pronounced or even eliminated. This facilitates for the user or operator to observe details of the display stream even during an autofocus operation. Another effect may be an increased similarity between consecutive images. This may in turn result in an increased predictability of consecutive images and an associated reduced bitrate.

The strength of this "stronger" or "enhanced" sharpening filter may be selected based on statistics, e.g. a previous mapping of how the contrast is expected to change during an in-focus check for a particular focus-motor position. The mapping may be the result of calculation or modeling as well, rather than being the result of empirical measurements. In either case it will be known how strong the sharpening filter should be in order to compensate for the blurring in the best possible way. It should thus be noted that for the purposes of the present invention an actual calculation of a sharpness value may not have to be performed at the time of acquiring the images, rather the sharpness value or a shift in sharpness value may be estimated or assumed starting from other parameters, such as an actual or relative shift in focus-motor position. However, since embodiments of the present invention are used in an in-focus check, where a value for the sharpness in each image is evaluated anyway the actual values for the images concerned may be used as well.

The result for a user or for processes and equipment downstream the camera will be that no information is lost, and that the visual effects of the in-focus check are reduced.

The strength of the sharpening filter may also be determined in an evaluation step, as indicated in Fig. 8 with the box "Contrast Evaluation". One example could be that the contrast as evaluated (in the region(s) of interest) should maintain the same as in the original image, within a set threshold, or that the contrast should reach another set value, within a threshold. If the contrast is not within a specified interval a stronger or weaker sharpening filter may be applied accordingly. From a computational standpoint this may be a more resource demanding approach, though still perfectly viable even in a live feed.

In second group of embodiments a scaling filter may be applied. The scaling filter will alter the magnification, as displayed, for the images acquired during the shift in focus-motor position, such as to obtain a constant field of view. Again, similar to the situation with sharpening, scaling may be applied to some degree in the processing of any image, and in the actual situation the scaling factor will be altered such that the field of view for the shifted images will the same as for the original image. In an actual camera several kinds of image transformation are performed (rotating, scaling, distortion correction) and the scaling filter may in practice comprise such image transformation as well. The action of harmonizing the magnification of the displayed images will also improve the appearance for the user during an in-focus check and, perhaps more importantly from a technical viewpoint in that it may prevent errors in downstream processing performed during image analysis.

When it comes to compensating for a varying field of view there are several options. It may be the result of a mapping, e.g. that the information is stored in a database such that a transformation may be based on the present focus-motor position of the imaging optics, similar as for the situation in the contrast adjustment or in transformations related to image distortions. An alternative could be to correlate the images in an effort to deduce the degree of movement.

In a third embodiment the first and second embodiment are combined, such that both contrast and magnification are adjusted. Any of the embodiments will reduce an observable effect of an in-focus check. The effect may be benefitted from as is, i.e. the minimization of observable effect is the goal. As an alternative the reduced observable effect may be benefitted from by making the in-focus check more aggressive. One example would be that the shifts in focus-motor position made during the in-focus check may be increased. This would increase the shift in magnification and contrast to a greater extent, yet for a user and for downstream image analysis the result may be comparable or better than what it was prior to using one of the new embodiments.

An adjustment of magnification may form a part of a more complex scaling operation also comprising a distortion correction ensuring that stationary objects are imaged in stationary position when the images are compared.

Sharpening of images is commonly used, even more so after the introduction and increased use of digital photography. Image sharpening is often referred to as "unsharp masking" and there is ample information available in the literature.

When determining the sharpness in an image or in regions of an image the most common measure is the contrast. When using the contrast as a measure of how well the optics has been focused it may be important to note that it is rarely the contrast in image as a whole that is used. Rather, a region of interest is selected and the contrast in this region of interest is the only measure considered or a measure given a greater weight. In other embodiments several regions of interest are selected. An analogue selection is a "region of no interest". This approach may be used e.g. in a night scene when there is a lamppost in the foreground. The lamp post may be totally irrelevant for the scene, yet it may affect an autofocus or the brightness of the overall image adversely and for that reason an area including the lamp post (or at least the light source thereof) is categorized as an area of no interest and is disregarded in several image processing operations. In either case, the calculation of contrast may use a mask defining the areas to be considered.

The disclosure also relates to a video camera configured to perform the method as defined in the appended claims, as well as to the use of a video camera for performing the method. Details of such a video camera have been discussed referring to Fig. 1, as well as interweaved in the description of the method.

## Claims

1. A method for processing images of an image stream acquired during an in-focus check, comprising
acquiring a first image at a first focus-motor position,
acquiring a second image at a second focus-motor position shifted in a first direction in relation to the first focus-motor position,
calculating a first sharpness value for the first image,
calculating a second sharpness value for the second image,
applying a sharpening filter on the second image such that a difference in sharpness value between the first and second images is reduced,
applying a scaling operation transforming the second image such as to minimize a difference in a field of view in the images,
applying a masked noise-reduction filter to the second image such that an amount of noise-reduction varies in different regions of the second image, wherein the mask is based on the sharpening filter, and
adding the first and second images to a display stream.

2. The method of claim 1, wherein the method further comprises acquiring a third image at a third focus-motor position shifted in a direction opposite to the first direction, applying a sharpening filter on the third image, thus increasing the sharpness value thereof and adding it to a display stream.

3. The method of any preceding claim, wherein a strength of the sharpening filter applied to the second and/or third image is based on the first focus-motor position, and the second and/or third focus-motor position.

4. The method of any preceding claim, wherein a strength of the sharpening filter applied to the second and or third image is based on the first sharpness value in at least a region of the first image.

5. The method of claim 4, wherein the strength of the sharpening filter is set to vary between different regions of the image.

6. The method of claim 5, wherein at least one of said different regions includes an object identified with object detection.

7. The method of any one of claims 2-6, further comprising
applying a scaling operation transforming the third image such as to minimize a difference in a field of view in the images.

8. The method of claim 1 or 7, wherein the scaling operation comprises a distortion correction.

## Patentansprüche

1. Verfahren zur Verarbeitung von Bildern eines Bildstroms, der während einer Fokussierungsprüfung bezogen wurde, wobei das Verfahren Folgendes umfasst:
Beziehen eines ersten Bilds bei einer ersten Fokusmotorposition,
Beziehen eines zweiten Bilds bei einer zweiten Fokusmotorposition, die in Bezug auf die erste Fokusmotorposition in einer ersten Richtung verschoben ist,
Berechnen eines ersten Schärfewerts für das erste Bild,
Berechnen eines zweiten Schärfewerts für das zweite Bild,
Anwenden eines Schärfungsfilters auf das zweite Bild, so dass ein Unterschied beim Schärfewert zwischen dem ersten und dem zweiten Bild verringert wird,
Anwenden eines Skalierungsvorgangs, der das zweite Bild umwandelt, um einen Unterschied bei einem Sichtfeld in den Bildern zu minimieren,
Anwenden eines maskierten Rauschverringerungsfilters auf das zweite Bild,
so dass ein Rauschverringerungsumfang in verschiedenen Regionen des zweiten Bilds variiert, wobei die Maske auf dem Schärfungsfilter basiert, und
Hinzufügen des ersten und des zweiten Bilds zu einem Anzeigestrom.

2. Verfahren nach Anspruch 1, wobei das Verfahren weiterhin das Beziehen eines dritten Bilds bei einer dritten Fokusmotorposition, die in einer Richtung entgegengesetzt zu der ersten Richtung verschoben ist, das Anwenden eines Schärfungsfilters auf das dritte Bild, wodurch der Schärfewert dieses erhöht wird, und das Hinzufügen dieses zu einem Anzeigestrom umfasst.

3. Verfahren nach einem vorhergehenden Anspruch, wobei eine Stärke des Schärfungsfilters, der auf das zweite und/oder das dritte Bild angewendet wird, auf der ersten Fokusmotorposition und der zweiten und/oder der dritten Fokusmotorposition basiert.

4. Verfahren nach einem vorhergehenden Anspruch, wobei eine Stärke des Schärfungsfilters, der auf das zweite und/oder das dritte Bild angewendet wird, auf dem ersten Schärfewert in mindestens einer Region des ersten Bilds basiert.

5. Verfahren nach Anspruch 4, wobei die Stärke des Schärfungsfilters eingestellt ist, um zwischen verschiedenen Regionen des Bilds zu variieren.

6. Verfahren nach Anspruch 5, wobei mindestens eine der verschiedenen Regionen ein Objekt beinhaltet, das mit Objekterkennung identifiziert wurde.

7. Verfahren nach einem der Ansprüche 2-6, das weiterhin Folgendes umfasst:
Anwenden eines Skalierungsvorgangs, der das dritte Bild umwandelt, um einen Unterschied bei einem Sichtfeld in den Bildern zu minimieren.

8. Verfahren nach Anspruch 1 oder 7, wobei der Skalierungsvorgang eine Verzerrungskorrektur umfasst.

## Revendications

1. Procédé de traitement d'images d'un flux d'images acquis pendant une vérification de mise au point, comprenant de
acquérir une première image à une première position de moteur de mise au point,
acquérir une seconde image à une seconde position de moteur de mise au point décalée dans une première direction en relation avec la première position de moteur de mise au point,
calculer une première valeur de netteté pour la première image, calculer une seconde valeur de netteté pour la seconde image, appliquer un filtre de netteté sur la seconde image de sorte qu'une différence de valeur de netteté entre la première et la seconde image soit réduite,
appliquer une opération de mise à l'échelle transformant la seconde image de manière à minimiser une différence d'un champ de vision dans les images,
appliquer un filtre de réduction à bruit masqué à la seconde image de sorte qu'une proportion de réduction de bruit varie dans différentes régions de la seconde image, dans lequel le masque est basé sur le filtre de netteté, et
ajouter la première et la seconde image à un flux d'images.

2. Procédé selon la revendication 1, dans lequel le procédé comprend en outre d'acquérir une troisième image à une troisième position de moteur de mise au point dans une direction opposée à la première direction, appliquer un filtre de netteté sur la troisième image, en augmentant ainsi la valeur de netteté de cette dernière et l'ajouter à un flux d'affichage.

3. Procédé selon une quelconque des revendications précédentes, dans lequel une intensité du filtre de netteté appliquée à la seconde et/ou troisième image est basée sur la première position de moteur de mise au point, et la seconde et/ou troisième position de moteur de mise au point.

4. Procédé selon une quelconque des revendications précédentes, dans lequel une intensité du filtre de netteté appliqué à la seconde et/ou troisième image est basée sur la première valeur de netteté dans au moins une région de la première image.

5. Procédé selon la revendication 4, dans lequel l'intensité du filtre de netteté est réglée afin de varier entre différentes régions de l'image.

6. Procédé selon la revendication 5, dans lequel au moins une desdites régions différentes inclut un objet identifié avec la détection d'objet.

7. Procédé selon une quelconque des revendications 2-6, comprenant en outre de :
appliquer une opération de mise à l'échelle transformant la troisième image de manière à minimiser une différence d'un champ de vision dans les images.

8. Procédé selon la revendication 1 ou 7, dans lequel l'opération de mise à l'échelle comprend une correction de distorsion.
